Europäisches Patentamt

(19) European Patent Office

Office européen des brevets

(11) Publication number: **0 262 964 B1**

# EUROPEAN PATENT SPECIFICATION

(45) Date of publication of patent specification: **10.02.93**

(51) Int. Cl.5: **C22B 3/00**, C22B 23/00, C01G 3/12, C01G 9/08, C01G 51/06, C01G 53/06

(21) Application number: **87308696.1**

(22) Date of filing: **01.10.87**

(54) **Recovery of nickel or cobalt from solvent extraction strip solutions.**

(30) Priority: **03.10.86 US 915308**

(43) Date of publication of application:
**06.04.88 Bulletin 88/14**

(45) Publication of the grant of the patent:
**10.02.93 Bulletin 93/06**

(84) Designated Contracting States:
**DE FR GB**

(56) References cited:
| | |
|---|---|
| BE-A- 833 099 | DE-C- 720 881 |
| FR-A- 1 226 788 | FR-A- 2 129 915 |
| FR-A- 2 198 896 | FR-A- 2 285 465 |
| US-A- 2 408 311 | US-A- 2 864 692 |
| US-A- 3 088 803 | US-A- 3 168 375 |
| US-A- 3 218 161 | US-A- 3 640 706 |
| US-A- 4 118 221 | US-A- 4 231 993 |
| US-A- 4 594 102 | |

(73) Proprietor: **CHEVRON RESEARCH AND TECH-NOLOGY COMPANY**
**P.O. Box 7643, 555 Market Street**
**San Francisco, CA 94120(US)**

(72) Inventor: **Litz, John E.**
**11010 W. 29th Avenue**
**Lakewood, CO 80215(US)**

(74) Representative: **Nash, David Allan et al**
**Haseltine Lake & Co. Temple Gate House**
**Temple Gate**
**GB-Bristol BS1 6PT(GB)**

EP 0 262 964 B1

## Description

This invention relates to the recovery of metal values from spent catalysts and is concerned with the recovery of nickel and/or cobalt from a solution which contains copper and zinc.

Many hydrocarbon feedstocks contain high percentages of metals as contaminants, i.e., iron, nickel. or vanadium. Because of the growing shortages of petroleum in the world refiners are forced to use feedstocks that contain larger amounts of these metals. Once they are in the feed, they tend to deposit on the surfaces and/or in the interstices of hydroprocessing catalysts which contain catalytic metals (i.e., cobalt, nickel. molybdenum, or tungsten). When the hydroprocessing catalysts no longer give the desired conversion rates (due to plugging of the catalyst pores by coke or contaminant metals or due to reactor plugging), they are replaced and subsequently disposed of (referred to as "spent catalysts"). Because of environmental and economic considerations, it is therefore desirable to recover the heavy metal values from the spent catalyst, leaving the catalyst support in an environmentally benign form.

Mixed streams of nickel (Ni), cobalt (Co), copper (Cu), and zinc (Zn) are frequently derived from ores, but may also be a product if a leach from spent hydroprocessing catalysts. In recovering Ni or Co from spent catalysts, the process liquors are often contaminated with Cu and Zn. When the contaminants are in the starting materials they may contaminate the recovery products as well. It is for this reason that the separation is required.

The simple recovery of nickel and/or cobalt has been described in the prior art, see for example, U.S. Patents: 4,468,302; 4,547,348; 4,221,765; 4,241,031; 4,214,901; 4,042,474 and 4,093,526.

US-A-2,864,692 discloses a method of recovering cobalt from a calcined pyrite containing iron oxide and copper and cobalt values. US-A-4,594,102 discloses a process for recovering cobalt and nickel values from cobalt and nickel containing sulphidic material also containing iron and zinc.

However, when nickel (Ni) or cobalt (Co) values are mixed with copper (Cu) or zinc (Zn) they are less valuable. So, it is an object of this invention to separate and recover Ni or Co or mixtures thereof from a solution which also contains Cu and Zn.

Thus the present invention is directed to a process for recovering either nickel or cobalt values from an acidic strip solution containing zinc and copper values.

In accordance with the invention there is provided a process for selectively recovering nickel or cobalt values or mixtures thereof from a solution also containing copper and zinc, which process comprises:

(a) adjusting the pH of the solution to between 3.0 and 5.0, preferably between 3.5 and 4.5; then
(b) adding an effective amount of sulfide ions to precipitate any copper present as copper sulfide; then
(c) removing said copper sulfide precipitate from said solution; then
(d) adjusting the pH of said solution to between 3.0 and 5.0, preferably between 3.5 and 4.5; then
(e) adding an effective amount of sulfide ions to precipitate any zinc present as zinc sulfide after said copper sulfide precipitate is removed; then
(f) removing said zinc sulfide precipitate from said solution; and then
(g) adding an effective amount of carbonate ions to said solution to precipitate nickel and/or cobalt therefrom.

In a preferred embodiment, step (g) comprises heating said solution to between 30°C and 80°C and adjusting the pH of said solution to between 6.0 and 9.0, preferably between 7.0 and 8.0, with carbonate ions in an amount effective to precipitate the nickel and/or cobalt. In the process of the invention, it is preferred to adjust the pH of the solution in steps (a) and (d) to about 3.5; and to heat the solution of step (g) to around 80°C and adjust the pH to about 8.0.

Advantageously the precipitated nickel or cobalt carbonate is filtered off and the precipitate is repulped in water and refiltered.

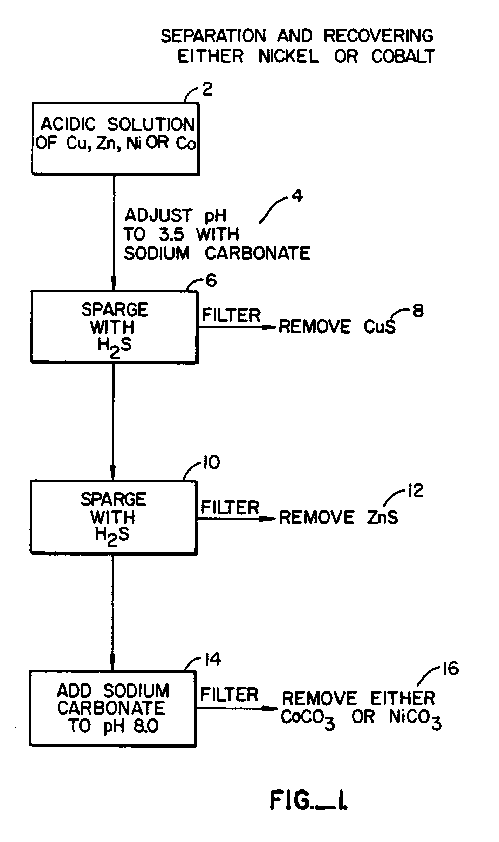

For a better understanding of the invention and to show how the same may be carried into effect, reference will now be made, by way of example, to the accompanying drawing, the single figure of which shows a flow diagram for a preferred embodiment of the invention.

Referring to the drawings, all the metal values (Cu, Zn, Ni or Co) are contained in a sulfuric acidic strip solution (see reference numeral 2). Other inorganic acids may also be used to form this solution such as $HNO_3$ or HCl. The pH of this solution may be from 1 to 3, but is more likely around 2. From here, the pH is adjusted to between 3.0 and 5.0, or more preferably about 3.5 (see reference numeral 4). Sodium carbonate (among other alkalis or bases such as NaOH, KOH, $K_2CO_3$, etc.) may be used to make this adjustment.

In the next several steps Cu and Zn are removed by sulfide precipitation. The above solution having the pH of 3.5 (preferably) is sparged with hydrogen sulfide ($H_2S$) (reference numeral 6) (however other sulfides may be used such as $Na_2S$, NaHS, or others) to between about -250 and -50 mv versus a Saturated Calomel Electrode (SCE). This forms a copper sulfide (CuS) precipitate which is removed by filtration (reference numeral 8). In a typical precipitation the concentration of Cu may be reduced from a level of approximately 150 milligrams per liter (mg/L) (in the acidic strip solution) to approximately 5 mg/L (in the filtrate), which is about a 30x reduction. After all the CuS precipitate is removed, the filtrate is then treated again with approximately the same amount of $H_2S$ (see reference numeral 10) to remove the soluble Zn as zinc sulfide (ZnS) and the precipitate is removed by filtration (see reference numeral 12). ZnS will not precipitate unless the CuS has been removed. Again, a typical precipitation will remove Zn from approximately 900 mg/L (in the acidic strip solution) to approximately 10 mg/L (in the filtrate), which is a 90x reduction.

Nickel or cobalt may now be precipitated. The temperature of the remaining solution may be adjusted to between 30° and 80°C to produce a better nickel or cobalt carbonate precipitate. The pH of the solution that is now free of Cu and Zn is adjusted to between 5.0 and 10.0, more preferably 8.0 (see reference numeral 14). Sodium carbonate may be used to increase the pH and to precipitate the Ni and Co. The carbonate ions combine with Co and Ni to form a precipitate which is usually very fine. This may be removed by filtration and/or settling (see reference numeral 16). All the precipitates may be filtered, repulped in water, and refiltered to purify the products.

The amount of carbonate ions that are needed to precipitate the nickel or cobalt is monitored by pH. Initially, when the carbonate ions are added to the acidic solution they are oxidized and evolved as carbon dioxide. As the acid is neutralized the pH begins to increase until the nickel or cobalt carbonates begin to form. Here, the pH levels off because the carbonate ions are being combined with the nickel or cobalt. Once all the metals have been precipitated, the pH begins to increase again.

The following Examples illustrate the invention.

Example 1

The pH of an acidic strip solution (having an original pH of 1.95) was adjusted to 3.75 with sodium carbonate. $H_2S$ was added to the solution to -85 mv (vs. SCE) to precipitate Cu as CuS which was removed by filtration. Cu was reduced from 154 mg/L in the strip solution to 5 mg/L in the filtrate. The filtrate was then sparged with more $H_2S$ to precipitate Zn as ZnS which was also removed by filtration. Zn was reduced from 890 mg/L in the strip solution to 10 mg/L in the filtrate. After the Zn precipitation, the solution was heated to 80°C to produce a better Ni carbonate precipitate. Ni was then precipitated (as nickel carbonate, $NiCO_3$) from the filtrate by adding sodium carbonate ($Na_2CO_3$). The $NiCO_3$ precipitate was very fine.

Example 2

An acidic strip solution, having a pH of 2.3 was adjusted to a pH of 3.5 with $Na_2CO_3$. $H_2S$ was added to -40 mv (vs. SCE) and only a small CuS precipitate formed. $H_2S$ was again added and a precipitate formed which reduced the soluble Zn from 80 mg/L in the strip solution to 8 mg/L in the filtrate. After the Zn precipitate was removed, the solution was heated to 80°C to produce a better cobalt carbonate precipitate. Cobalt was precipitated from the purified solution as cobalt carbonate by adding $Na_2CO_3$.

Example 3

A continuous precipitation was used in a pregnant Ni strip solution containing 32.9 g/L Ni, 142 ppm Cu, and 77 ppm Zn and was purified of copper and zinc using hydrogen sulfide. The continuous apparatus for removing Cu and Zn consisted of two sets of two vessels in series. In the first vessel of the first set, the solution was sparged with hydrogen sulfide to precipitate the copper. Then, the solution was filtered in the second vessel of the first set to remove the precipitated copper sulfide. In two additional vessels the solution was sparged in a first vessel with hydrogen sulfide to precipitate the zinc which was then filtered out in the second vessel as zinc sulfide. Removal efficiencies were 99.1% for Cu and 84.2% for Zn in this four-step continuous operation [i.e., 1) precipitate Cu; 2) filter; 3) precipitate Zn; and 4) filter].

The purified solutions were then fed to a four-stage precipitation apparatus (four vessels in series) operating at 80°C. Sodium carbonate was added to the first three vessels to control the pH at 6.0, 7.0, and 8.0 pH. The fourth vessel provided additional retention at a pH of 8.0. The produce precipitates were filtered; repulped in water, and refiltered. The precipitation efficiency, including loss in the repulp filtrate, was 97.5 to 99.4%. The sodium content of the precipitates was high, indicating the need for displacement washing in addition to the repulp.

## TABLE I

### Nickel Carbonate Product Analysis

| Element | Continuous Precipitation from Purified Solutions | | | |
|---|---|---|---|---|
| Ni | 43.3 | 43.3 | 44.5 | 42.3 |
| Cu | 0.003 | 0.003 | 0.003 | 0.003 |
| Zn | 0.017 | 0.10 | 0.029 | 0.077 |

### Example 4

A continuous precipitation was used in a pregnant Co strip solution containing 40.8 g/L Co and 48 parts per million (ppm) Zn. The solution was partially purified with respect to zinc using hydrogen sulfide. The continuous precipitation procedure was carried out the same as in Example 3. Removal efficiency was 93% for Zn in a two-step continuous operation.

The purified solutions were fed to a four-stage precipitation apparatus (four vessels in series) operating at 80°C. Sodium carbonate was added to the first three vessels to control the pH at 6.0, 7.0, and 8.0 pH. The fourth vessel provided additional retention at a pH of 8.0. The product precipitates were filtered, repulped in water, and refiltered. The precipitation efficiency, including loss in the repulp filtrate, was 97.5 to 99.0%. The sodium content of the precipitates was high, indicating the need for displacement washing in addition to the repulp.

## TABLE II

### Cobalt Carbonate Product Analysis

| Element | Continuous Precipitation from Purified Solutions | | | |
|---|---|---|---|---|
| Co | 47.0 | 49.0 | 49.1 | 46.9 |
| Zn | 0.006 | 0.19 | 0.046 | 0.16 |

## Claims

1. A process for selectively recovering nickel or cobalt values or mixtures thereof from a solution also containing copper and zinc, which process comprises:

    (a) adjusting the pH of the solution to between 3.0 and 5.0; then

    (b) adding an effective amount of sulfide ions to precipitate any copper present as copper sulfide; then

    (c) removing said copper sulfide precipitate from said solution; then

    (d) adjusting the pH of said solution to between 3.0 and 5.0; then

    (e) adding an effective amount of sulfide ions to precipitate any zinc present as zinc sulfide after said copper sulfide precipitate is removed; then

    (f) removing said zinc sulfide precipitate from said solution; and then

    (g) adding an effective amount of carbonate ions to said solution to precipitate nickel and/or cobalt therefrom.

2. A process according to Claim 1, wherein step (g) comprises heating said solution to between 30°C and 80°C and adjusting the pH of said solution to between 6.0 and 9.0 with carbonate ions in an amount to precipitate the nickel and/or cobalt.

**3.** A process according to Claim 1 or 2 and further comprising:

filtering the nickel and/or cobalt carbonate precipitate from said solution;

repulping the precipitate in water; and

refiltering the precipitate.

**4.** A process according to Claim 1, 2 or 3, wherein the pH is adjusted to between 3.5 and 4.5 in steps (a) and (d), and to between 7.0 and 8.0 in step (g).

**Patentansprüche**

**1.** Verfahren zur selektiven Gewinnung des Nickel- oder Kobaltgehaltes oder von Gemischen davon aus einer Lösung, die auch Kupfer und Zink enthält, dadurch gekennzeichnet, daß man

(a) den pH-Wert der Lösung auf zwischen 3,0 und 5,0 einstellt, dann

(b) eine wirksame Menge an Sulfidionen zusetzt um alles vorhandene Kupfer als Kupfersulfid zu fällen, dann

(c) diesen Kupfersulfidniederschlag aus dieser Lösung entfernt, dann

(d) den pH-Wert dieser Lösung auf zwischen 3,0 und 5,0 einstellt, dann

(e) eine wirksame Menge an Sulfidionen zur Fällung alles vorhandenen Zinks als Zinksulfid zufügt nachdem diese Kupfersulfidfällung entfernt ist, dann

(f) diesen Zinksulfidniederschlag aus der Lösung entfernt und dann

(g) eine wirksame Menge an Carbonationen zu dieser Lösung zusetzt, um Nickel und/oder Kobalt auszufällen.

**2.** Verfahren nach Anspruch 1, dadurch gekennzeichnet, daß die Stufe (g) das Erhitzen dieser Lösung auf zwischen 30°C und 80°C und die Einstellung des pH-Werts der Lösung auf zwischen 6,0 und 9,0 mit Carbonationen in solcher Menge umfaßt, um das Nickel und/oder Kobalt zu fällen.

**3.** Verfahren nach Anspruch 1 und 2, dadurch gekennzeichnet, daß man weiterhin den Nickel- und/oder Kobaltcarbonatniederschlag aus dieser Lösung abfiltriert, den Niederschlag wieder in Wasser suspendiert und den Niederschlag wieder filtriert.

**4.** Verfahren nach Anspruch 1, 2 oder 3, dadurch gekennzeichnet, daß der pH-Wert auf zwischen 3,5 und 4,5 in den Stufen (a) und (d) und zwischen 7,0 und 8,0 in Stufe (g) eingestellt wird.

**Revendications**

**1.** Procédé pour récupérer sélectivement le nickel ou le cobalt ou leurs mélanges d'une solution contenant aussi du cuivre et du zinc, procédé qui consiste :

(a) à ajuster le pH de la solution entre 3,0 et 5,0 ; ensuite

(b) à ajouter une quantité efficace d'ions sulfure pour précipiter sous forme de sulfure de cuivre tout le cuivre présent ; ensuite,

(c) à séparer le précipité de sulfure de cuivre de ladite solution ; ensuite

(d) à ajuster le pH de cette solution entre 3,0 et 5,0 ; ensuite

(e) à ajouter une quantité efficace d'ions sulfure pour précipiter sous forme de sulfure de zinc tout le zinc présent après que le précipité de sulfure de cuivre a été enlevé ; ensuite

(f) à éliminer le précipité de sulfure de zinc de ladite solution ; puis

(g) à ajouter une quantité efficace d'ions carbonate à ladite solution pour précipiter dans cette dernière le nickel et/ou le cobalt.

**2.** Procédé suivant la revendication 1, dans lequel l'étape (g) consiste à chauffer la solution entre 30°C et 80°C et à ajuster le pH de la solution entre 6,0 et 9,0 avec des ions carbonate en une quantité permettant de précipiter le nickel et/ou le cobalt.

**3.** Procédé suivant la revendication 1 ou 2, consistant en outre :

à filtrer le précipité de carbonate de nickel et/ou de cobalt dans ladite solution ;

à remettre le précipité en suspension dans l'eau ; et

à filtrer de nouveau le précipité.

4. Procédé suivant la revendication 1, 2 ou 3, dans lequel le pH est ajusté entre 3,5 et 4,5 dans les étapes (a) et (d) et entre 7,0 et 8,0 dans l'étape (g).

SEPARATION AND RECOVERING
EITHER NICKEL OR COBALT

2

ACIDIC SOLUTION
OF Cu, Zn, Ni OR Co

ADJUST pH
TO 3.5 WITH
SODIUM CARBONATE

4

6

SPARGE
WITH
H$_2$S

FILTER REMOVE CuS

8

10

SPARGE
WITH
H$_2$S

FILTER REMOVE ZnS

12

14

ADD SODIUM
CARBONATE
TO pH 8.0

FILTER REMOVE EITHER
CoCO$_3$ OR NiCO$_3$

16

FIG.—1